# EUROPEAN PATENT APPLICATION

(11) **EP 3 060 010 A1**
(43) Date of publication of application: **24.08.2016**
(21) Application number: 13895636.2
(22) Date of filing: 16.10.2013
(51) Int. Cl.: H04W 52/02, H04W 36/32, H04W 48/16, H04W 48/18, H04W 84/12, H04W 88/06

(54) **MOBILE TERMINAL DEVICE, COMMUNICATION CONTROL METHOD, AND COMMUNICATION CONTROL PROGRAM**

(71) Applicant: Fujitsu Limited, Kawasaki-shi, Kanagawa 211-8588 (JP)
(72) Inventor: HARA, Yasushi, Kawasaki-shi Kanagawa 211-8588 (JP); TOYOKURA, Akemi, Kawasaki-shi Kanagawa 211-8588 (JP); MIURA, Yuichi, Kawasaki-shi Kanagawa 211-8588 (JP); HARA, Masao, Kawasaki-shi Kanagawa 211-8588 (JP)
(74) Representative: Schultes, Stephan
(86) International application number: PCT/JP2013/078105
(87) International publication number: WO 2015/056316

(57) **Abstract**

A mobile terminal apparatus (101) detects transition of a screen (110) from a non-display state to a display state. In response to the transition of the screen (110) from the non-display state to the display state, the mobile terminal apparatus (101) determines whether a specified access point exists in a communications area (104) of a base station (102), where the mobile terminal apparatus (101) is present. The specified access point is an access point (103) for which a connection process to connect to a network has been performed by the mobile terminal apparatus (101) and that is installed at a specified location. The mobile terminal apparatus (101) controls communication with the access point (103) based on a result of the determination.

## Description

### TECHNICAL FIELD

The present invention relates to a mobile terminal apparatus, a communications control method, and a communications control program.

### BACKGROUND ART

One conventional mobile terminal apparatus has a communications function that connects to a mobile communications network (mobile telephone network) and a communications function that connects to a wireless local area network (LAN). The mobile terminal apparatus, for example, can connect to base stations of a mobile communications network, provided in various locations; and networks such as the Internet via wireless LAN access points, etc.

According to a related technique, the necessity of a channel scan of a wireless communications network is determined based on a comparison result of the position of a mobile wireless communications apparatus and a connection position where connection to a wireless base station is made, and a comparison result of the time when the position is obtained and a connection time when connection to the wireless base station is made. According to another technique, information concerning differences of a newly displayed screen from a previous screen of a display terminal is accumulated and the accumulated volume is checked each time the screen is updated. When the accumulated volume of information becomes a threshold or greater, a normal state transition message instructing a change from an energy-saving state to a normal state is generated and transmitted to the display terminal. According to a further technique, when a wakeup event is received, an inquiry of whether wakeup is possible is made to a sub-display controller and after a response permitting wakeup is obtained, a control signal for waking up the system is supplied to EC/KBC.

Patent Document 1: Japanese Laid-Open Patent Publication No. 2013-005071
Patent Document 2: Japanese Laid-Open Patent Publication No. 2008-193603
Patent Document 3: Japanese Laid-Open Patent Publication No. 2008-158772

### DISCLOSURE OF INVENTION

### PROBLEM TO BE SOLVED BY THE INVENTION

Nonetheless, with the conventional techniques, a problem arises in that scanning operations of a mobile terminal apparatus searching for an access point of a wireless LAN, etc. increases power consumption of the mobile terminal apparatus.

According to one aspect, one object of the present invention is to provide a mobile terminal apparatus, a communications control method, and a communications control program that can ensure usability and suppress power consumption.

### MEANS FOR SOLVING PROBLEM

According to one aspect of the present invention, a mobile terminal apparatus, a communications control method, and a communications control program are proposed where the mobile terminal apparatus has a first communications unit configured to communicate with a base station and a second communications unit configured to connect to a network through an access point, and maintains a search for a specified access point, when based on access point information stored in a storage unit, the mobile terminal apparatus is in a communications area of the base station and the communications area has the specified access point. The storage unit is configured to store the access point information that is associated with identification information of the communications area of the base station and indicates whether the access point is the specified access point.

### EFFECT OF THE INVENTION

According to an embodiment of the present invention, an effect is achieved in that usability can be ensured and power consumption can be suppressed.

### BRIEF DESCRIPTION OF DRAWINGS

FIG. 1 is a diagram depicting an example of a communications method according to a first embodiment;
FIG. 2 is a diagram depicting an example of system configuration of a communications system 200;
FIG. 3 is a block diagram of an example of hardware configuration of a mobile terminal apparatus 101;
FIG. 4 is a diagram depicting an example of the contents of a connection AP table 400;
FIG. 5 is a diagram depicting an example of the contents of a prior connection table 500;
FIG. 6 is a block diagram of an example of a functional configuration of the mobile terminal apparatus 101 according to the first embodiment;
FIG. 7 is a diagram depicting an example of controlling communication with an access point APi;
FIG. 8 is a diagram (part 1) of an example of operation of the mobile terminal apparatus 101 according to the first embodiment;
FIG. 9 is a diagram (part 2) of an example of operation of the mobile terminal apparatus 101 according to the first embodiment;
FIG. 10 is a diagram (part 3) of an example of operation of the mobile terminal apparatus 101 according to the first embodiment;
FIG. 11 is a diagram (part 4) of an example of operation of the mobile terminal apparatus 101 according to the first embodiment;
FIG. 12 is a flowchart of an example of a procedure of a communications control process of the mobile terminal apparatus 101 according to the first embodiment;
FIG. 13 is a flowchart of an example of a procedure of an updating process of the mobile terminal apparatus 101 according to the first embodiment;
FIG. 14 is a block diagram of an example of a functional configuration of the mobile terminal apparatus 101 according to a second embodiment;
FIG. 15 is a diagram (part 1) depicting a calculation example of an integrated value Ts of a connection time to an access point APi;
FIG. 16 is a diagram (part 2) depicting a calculation example of the integrated value Ts of a connection time to an access point APi; and
FIG. 17 is a flowchart of an example of a procedure of the updating process of the mobile terminal apparatus 101 according to the second embodiment.

### BEST MODE(S) FOR CARRYING OUT THE INVENTION

Embodiments of a mobile terminal apparatus, a communications control method, and a communications control program according to the present invention will be described in detail with reference to the accompanying drawings.

### (First embodiment)

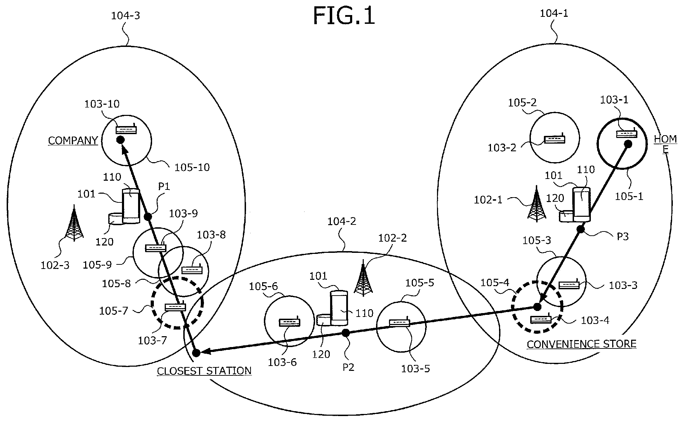

FIG. 1 is a diagram depicting an example of the communications method according to a first embodiment. In FIG. 1, a mobile terminal apparatus 101 has a screen 110 that displays various types of information, and is a computer capable of wirelessly communicating with a base station 102 and an access point 103. More specifically, for example, the mobile terminal apparatus 101 is a smartphone, a mobile telephone, a table-type personal computer (PC), a Personal Handy-phone System (PHS) device, and the like.

The base station 102 is a computer that is capable of wirelessly communicating with a mobile terminal apparatus 101 that is present a communications area 104 of the base station 102, and is a wireless station serving as a hub for the mobile terminal apparatus 101 to connect to a network. More specifically, for example, the base station 102 is a base station of a mobile communications network (mobile telephone network) spread out over various areas.

The access point 103 is a computer capable of wirelessly communicating with a mobile terminal apparatus 101 that is present in a communications area 105 of the access point 103, and is a wireless station serving as a hub for the mobile terminal apparatus 101 to connect to a network. More specifically, for example, the access point 103 is an access point of a wireless LAN spread out over various areas.

The mobile terminal apparatus 101 searches for a base station 102 and an access point 103 by respectively differing scanning operations, and connects to a network through a found base station 102 or access point 103. The network, for example, is a mobile communications network, a LAN, a wide area network (WAN), the Internet, and the like.

The access point 103 includes available access points that can be used by a user of the mobile terminal apparatus 101 and unavailable access points that cannot be used by the user of the mobile terminal apparatus 101. Therefore, the mobile terminal apparatus 101 performs scanning operations of searching for an access point 103 with which wireless communication is possible and connects to a network through an access point 103 that can be used among found access points 103.

Hereinafter, a base station of a mobile communications network will be described as one example of the base station 102. Further, an access point of a wireless LAN will be described as one example of the access point 103. In the example depicted in FIG. 1, base stations 102-1 to 102-3 are depicted as the base stations 102 of a mobile communications network, and communications areas 104-1 to 104-3 of the base stations 102-1 to 102-3 are depicted. Further, access points 103-1 to 103-10 are depicted as the access points 103 of a wireless LAN, and communications areas 105-1 to 105-10 of the access points 103-1 to 103-10 are depicted.

Here, although an access point 103 of the wireless LAN has a fast maximal communications speed and high transmission efficiency compared to a base station 102 of the mobile communications network, the communications area thereof tends to be small. Furthermore, many access points 103 of the wireless LAN can only be used by users that subscribe to a specific service.

Thus, it is undesirable for a mobile terminal apparatus 101 to search for an access point 103 when there are no access points 103 that can be used within a vicinity of the mobile terminal apparatus 101. For example, if the mobile terminal apparatus 101 repeatedly searches for an access point 103 when there are no available access points 103 present, power consumption of the mobile terminal apparatus 101 may increase.

On the other hand, when an available access point 103 is in a vicinity of the mobile terminal apparatus 101, if the mobile terminal apparatus 101 does not search for the access point 103, the mobile terminal apparatus 101 cannot automatically connect to the access point 103 and usability may decrease. Further, when an access point 103 is to be used, it is conceivable that the user instructs the start of a search for an access point 103; however, this requires user input and further requires the user to know installation locations of available access points 103.

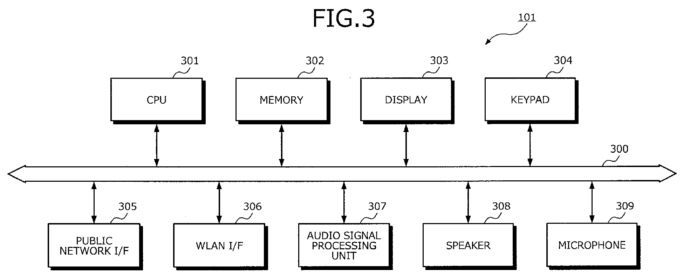

Thus, in the first embodiment, the communications control method will be described that enables automatic connection to an access point 103 that among access points 103 available to a user, is installed at a location having a high possibility of the user staying for a relatively long time such as the residence of the user. More specifically, for example, when the mobile terminal apparatus 101 of the user is present in the communications area of a base station 102 and a specified access point is present in the communications area of the base station 102, the mobile terminal apparatus 101 keeps searching for a specified access point. Herein, an example of a communications control process of the mobile terminal apparatus 101 will be described.
(1) The mobile terminal apparatus 101 detects "screen display ON". Here, screen display ON is a transition of the screen 110 from a non-display state to a display state. The non-display state of the screen 110, for example, is a state where power supply to the screen 110 has been suspended. Further, the display state of the screen 110, for example, is a state where power is supplied to the screen 110.
   More specifically, for example, the mobile terminal apparatus 101 receives user input to switch the screen 110 from the non-display state to the display state and thereby, detects screen display ON. In the description hereinafter, instances where the screen 110 is in the non-display state may be indicated as "screen_OFF" and instances where the screen 110 is in the display state may be indicated as "screen_ON".
(2) The mobile terminal apparatus 101, triggered by screen display ON, determines based on the contents of a storage unit 120, whether a specified access point exists in the communications area 104 (of a base station 102) where the mobile terminal apparatus 101 is present.
   Here, a specified access point is an access point 103 that is installed at a specified location and for which a connection process for connecting to a network has been performed by the mobile terminal apparatus 101. A connection process is a process for connecting to a network through an access point 103. In the connection process, an authentication process of the user of the mobile terminal apparatus 101, etc. is performed.
   Further, a specified location is a location having a high possibility of the user of the mobile terminal apparatus 101 staying for a relatively long time. For example, a specified location is the residence of the user, that of a parent of the user, that of a friend of the user; a school or company of the user; an eating establishment, library, etc. used by the user; and the like. Further, the storage unit 120 is a storage apparatus of the mobile terminal apparatus 101 (e.g., memory 302 depicted in FIG. 3 and described hereinafter).
   The storage unit 120 stores access point information associated with identification information of the communications area 104 of a base station 102. Access point information is information indicating that an access point 103 is a specified access point. For example, access point information is information indicating whether in the communications area 104 of a base station 102, an access point 103 for which a connection process for connecting to a network has been performed by the mobile terminal apparatus 101 is installed at a specified location.
   More specifically, for example, the mobile terminal apparatus 101 being in the communications area 104 of a base station 102, wirelessly communicates with the base station 102 and thereby, obtains identification information of the communications area 104 of the base station 102. Next, the mobile terminal apparatus 101 searches the storage unit 120 for access point information associated with the obtained identification information of the communications area 104 of the base station 102.
   Here, if access point information is retrieved, this indicates prior connection of the mobile terminal apparatus 101 to an access point 103 in the communications area 104 of a base station 102. In this case, the mobile terminal apparatus 101 refers to the retrieved access point information and determines whether a specified access point exists in the communications area 104 of the base station 102.
   On the other hand, if no access point information is retrieved, this indicates no prior connection of the mobile terminal apparatus 101 to an access point 103 in the communications area 104 of the base station 102. In this case, the mobile terminal apparatus 101 determines that no specified access point exists in the communications area 104 of the base station 102.
(3) The mobile terminal apparatus 101 controls communication with the access point 103 based on the determination result. Here, among available access points 103, automatic connect to an access point 103 installed in a specified location is desirable without user input because compared to other access points 103, the user spends longer intervals at the specified location.

For example, if the access point 103 is automatically connected to even during screen_OFF, an incoming Internet Protocol (IP) telephone call can be received through the access point 103 at a maximal speed that is fast compared to the base station 102, enabling usability to be improved.

Therefore, the mobile terminal apparatus 101, for example, triggered by screen display ON, searches for a specified access point and keeps searching for a specified access point even after screen display OFF. In other words, when the mobile terminal apparatus 101 is in the communications area 104 of a base station 102 and a specified access point exists in the communications area 104, the mobile terminal apparatus 101 continues to search for the access point 103, even during screen_OFF.

Further, for example, when the mobile terminal apparatus 101 is present in a communications area (of a base station 102) having an access point 103 other than a specified access point, the mobile terminal apparatus 101 searches for an access point 103 periodically for a fixed number of times (e.g., several times) or for a fixed interval (e.g., several minutes). More specifically, for example, when determining that no specified access point exists, the mobile terminal apparatus 101, triggered by screen display OFF, searches for an access point 103 periodically for a fixed number of times or for a fixed interval. In other words, when no specified access point exists power consumption of the mobile terminal apparatus 101 can be suppressed by limiting a search count or search interval of a periodic search for an access point 103 during screen_OFF.

Further, when no access point information corresponding to the identification information of the communications area 104 to which the mobile terminal apparatus 101 belongs is stored in the storage unit 120, configuration may be such that even with transition to screen display OFF, the mobile terminal apparatus 101 does not search for an access point 103. In other words, when the mobile terminal apparatus 101 is in the communications area 104 of a base station 102 and there is no prior connection to an access point 103 in the communications area 104, there is a low possibility of an available access point 103 existing in a vicinity of the mobile terminal apparatus 101. Therefore, power consumption of the mobile terminal apparatus 101 can be suppressed by not searching for an access point 103 during screen_OFF.

Thus, the mobile terminal apparatus 101 according to the first embodiment, triggered by screen display ON, can determined whether a specified access point is present in the communications area 104 of a base station 102. Further, the mobile terminal apparatus 101 can control communication with an access point 103, based on a result of the determination.

Here, an example of communication control of the mobile terminal apparatus 101 will be described assuming a case where the user of the mobile terminal apparatus 101 passes through the station closest to a company depicted in FIG. 1, heads to a convenience store near home and thereafter, goes home. In FIG. 1, the communications area 105-1 represented by a thick circle represents of the communications area 105 a specified access point. The communications areas 105-4, 105-7 represented by thick dotted-lined circles represent the communications areas 105 of access points 103 that are not installed in a specified location, but have prior connection of the mobile terminal apparatus 101. Here, the mobile terminal apparatus 101 is assumed to periodically search for an access point 103 during screen_ON.

At a point P1 en route from the company to the closest station, transition to screen display ON is assumed. In this case, the mobile terminal apparatus 101 being in the communications area 104-3 of the base station 102-3, determines whether a specified access point exists in the communications area 104-3.

In the example depicted in FIG. 1, in the communications area 104-3 of the base station 102-3, the access point 103-7, which is not installed in a specified location but has prior connection of the mobile terminal apparatus 101, exists. In this case, the mobile terminal apparatus 101, for example, triggered by screen display OFF, searches for an access point 103 periodically for a fixed number of times or for a fixed interval.

As a result, when an available access point 103 that is not installed at a specified location exists in a communications area 104 of a base station 102, the search count or search interval for an access point 103 during screen_OFF is limited in the communications area 104, enabling power consumption of the mobile terminal apparatus 101 to be suppressed. Further, periodic searches for an access point 103, triggered by screen_OFF and performed for a fixed number of times or for a fixed interval enable usability during screen_OFF to be ensured to a certain extent.

Next, at a point P2 en route from the station to the convenience store, transition to screen display ON is assumed. In this case, the mobile terminal apparatus 101 being in the communications area 104-2 of the base station 102-2, determines whether a specified access point exists in the communications area 104-2.

In the example depicted in FIG. 1, in the communications area 104-2 of the base station 102-2, no access point 103 having prior connection of the mobile terminal apparatus 101 exists. In this case, for example, even with transition to screen display OFF, the mobile terminal apparatus 101 does not search for an access point 103.

As a result, when no available access point 103 exists in a communications area 104 of a base station 102, a screen display OFF triggered search for an access point 103 is suspended in the communications area 104, enabling power consumption of the mobile terminal apparatus 101 to be suppressed.

Next, at point P3 en route from the convenience store to the home of the user, transition to screen display ON is assumed. In this case, the mobile terminal apparatus 101 being in the communications area 104-1 of the base station 102-1, determines whether a specified access point exists in the communications area 104-1.

In the example depicted in FIG. 1, in the communications area 104-1 of the base station 102-1, the access point 103-1 having prior connection of the mobile terminal apparatus 101 and installed at a specified location is present. In this case, the mobile terminal apparatus 101, for example, triggered by screen display OFF, periodically searches for an access point 103.

As a result, a screen display OFF triggered search for an access point 103 in the communications area 104 (of a base station 102) where a specified access point is present can be performed periodically. Consequently, even during screen_OFF, the access point 103-1 installed at the home of the user can be connected to automatically and drops in usability can be prevented.

Although the mobile terminal apparatus 101 has been described to be triggered by screen display ON to determine whether a specified access point exists in the communications area 104 (of a base station 102) where the mobile terminal apparatus 101 is present, configuration is not limited hereto. For example, at fixed intervals or each time the base station 102 to which the mobile terminal apparatus 101 connects changes, the mobile terminal apparatus 101 may determine whether a specified access point exists in the communications area 104 (of the base station 102) where the mobile terminal apparatus 101 is located.

### (Example of system configuration of communications system 200)

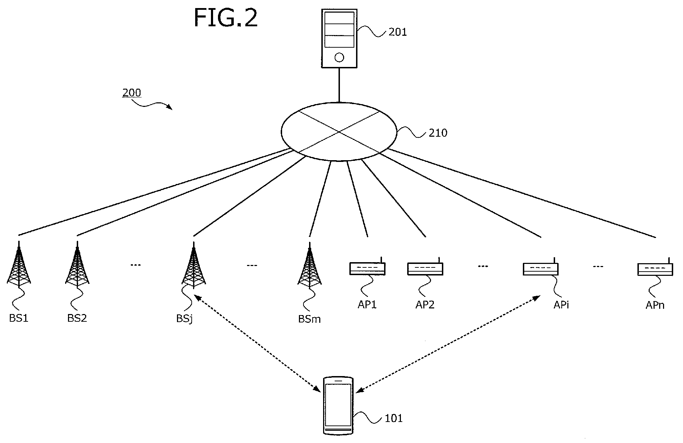

An example of system configuration of a communications system 200 according to the first embodiment will be described. FIG. 2 is a diagram depicting an example of system configuration of the communications system 200. In FIG. 2, the communications system 200 includes the mobile terminal apparatus 101, base stations BS1 to BSm, access points AP1 to APn, and a server 201. In the communications system 200, the base stations BS1 to BSm, the access points AP1 to APn, and the server 201 are connected through a network 210 that may be wireless or cabled. The network 210, for example, includes mobile communications networks, LANs, WANs, the Internet, etc.

Here, the base stations BS1 to BSm are base stations of a mobile communications network (mobile telephone network) spread out over various areas. In the description hereinafter, an arbitrary base station among the base stations BS1 to BSm may be indicated as "base station BSj", and a wireless communication range of a base station BSj may be indicated as "cell Cj" (j=1, 2, ..., m). The base stations 102 depicted in FIG. 1 correspond to a base station BSj and the communications areas 104 of the base stations 102 depicted in FIG. 1 correspond to a cell Cj.

The access points AP1 to APn are access points of a wireless LAN, spread out over various areas. The access points AP1 to APn may include portable access points and access points equipped on mobile objects such as trains, buses, and the like. In the description hereinafter, an arbitrary access point among the access points AP1 to APn may be indicated as "access point APi" and a wireless communication range of an access point APi may be indicated as "communications area Ai" (i=1, 2, ..., n). The access points 103 depicted in FIG. 1 correspond to an access point APi and the communications areas 105 of the access points 103 depicted in FIG. 1 correspond to a communications area Ai.

The mobile terminal apparatus 101, in a cell Cj, can wirelessly communicate with a base station BSj and connect to the network 210 through base station BSj. Further, the mobile terminal apparatus 101, in a communications area Ai, can wirelessly communicate with an access point APi and connect to the network 210 through the access point APi.

The server 201 is a computer that provides a service to the mobile terminal apparatus 101, through the network 210. A service is information processing provided to the mobile terminal apparatus 101 such as, for example, an email service, telephone service, web service, etc. More specifically, for example, the server 201 includes email servers, web servers, application servers, database servers, and the like.

In FIG. 2, although the mobile terminal apparatus 101 and the server 201 are respectively depicted singularly, configuration is not limited hereto. For example, the mobile terminal apparatus 101 may be provided for each user of the communications system 200 and the server 201 may be disposed for each service provided.

### (Example of hardware configuration of mobile terminal apparatus 101)

FIG. 3 is a block diagram of an example of hardware configuration of the mobile terminal apparatus 101. In FIG. 3, the mobile terminal apparatus 101 has a central processing unit (CPU 301), the memory 302, a display 303, a keypad 304, a public network interface (I/F) 305, a wireless LAN (WLAN) I/F 306, an audio signal processing unit 307, a speaker 308, and a microphone 309, respectively connected by a bus 300.

Here, the CPU 301 governs overall control of the mobile terminal apparatus 101. The memory 302, for example, includes read-only memory (ROM), random access memory (RAM), flash ROM, and the like. More specifically, for example, the flash ROM stores an operating system (OS) program; the ROM stores application programs; and the RAM is used as a work area of the CPU 301. Programs stored in the memory 302 are loaded onto the CPU 301, whereby encoded processes are executed by the CPU 301.

The display 303 displays data such as documents, images, and function information, in addition to a cursor, icons, and toolboxes. The display 303, for example, may be a liquid crystal display, an organic electroluminescence (EL) display, and the like. The screen 110 depicted in FIG. 1 corresponds to the display 303.

The keypad 304 has keys (including a power key) for inputting text, numerals, various instructions, etc. and inputs data. The keypad 304, for example, may be a touch panel input pad, a numeric key pad, and the like.

The public network I/F 305 has a wireless communications circuit and an antenna; is connected to the network 210 through a base station BSj of a mobile communications network and is connected to other computers (e.g., the server 201) through the network 210. The public network I/F 305 administers an internal interface with the network 210 and controls the input and output of data from other computers.

The WLAN I/F 306 has a wireless communications circuit and an antenna, is connected to the network 210 through an access point APi of a wireless LAN, and is connected to other computers through the network 210. The WLAN I/F 306 administers an internal interface with the network 210 and, controls the input and output of data from other computers.

The audio signal processing unit 307 is connected to the speaker 308 and the microphone 309. For example, sound received by the microphone 309 is A/D converted by the audio signal processing unit 307. Further, sound is output from the speaker 308.

Although not depicted, in addition to the components above, the mobile terminal apparatus 101, for example, may have a memory controller that controls the reading and writing of data with respect to the memory 302, a power management unit (PMU) that supplies power source voltage to the respective components, a battery, various types of sensors, a Global Positioning System (GPS) unit, and the like. Further, hardware configuration of a base station BSj, an access point APi, and the server 201, for example, is realized by a CPU, memory, an I/F, an auxiliary storage apparatus, a bus, etc.

### (Contents of connection AP table 400)

A connection AP table 400 used by the mobile terminal apparatus 101 will be described. The connection AP table 400, for example, is realized by the memory 302 depicted in FIG. 3.

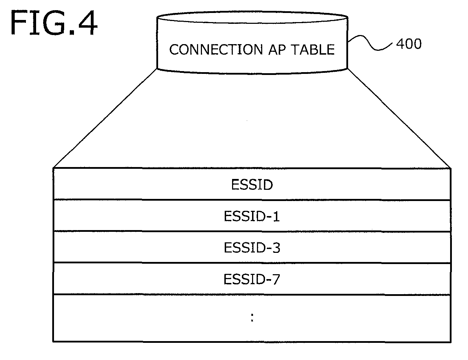

FIG. 4 is a diagram depicting an example of the contents of the connection AP table 400. In FIG. 4, the connection AP table 400 stores an Extended Service Set Identifier (ESSID) of an access point APi that performed connection from the mobile terminal apparatus 101 to the network 210.

Here, an ESSID is identification information identifying an access point APi. The mobile terminal apparatus 101 refers to the connection AP table 400 and is thereby able to identify ESSIDs (e.g., ESSID-1, ESSID-3, ESSID-7) of access points APi that can be used by the user of the mobile terminal apparatus 101.

The same ESSID may be appended to multiple access points AP. When an access point AP among the access points AP to which the same ESSID is appended can be used, the mobile terminal apparatus 101 can use the other access points AP appended with the same ESSID.

Examples of access points AP to which the same ESSID is appended include a set of the same access points AP for a communications service that can be used, a set of access points AP respectively installed at shops managed by a given company, and the like. For example, inside a shopping mall or university, to establish a wider communications area and enable seamless wireless communication, access points AP having the same ESSID may be provided near one another.

The contents of the connection AP table 400, for example, are updated at the time of the first connection to an access point APi. More specifically, for example, when consequent to a user operation, an access point APi is connected to for the first time, the ESSID of the connected access point APi is newly registered into the connection AP table 400.

### (Contents of prior connection table 500)

A prior connection table 500 used by the mobile terminal apparatus 101 will be described. The prior connection table 500, for example, is realized by the memory 302 depicted in FIG. 3.

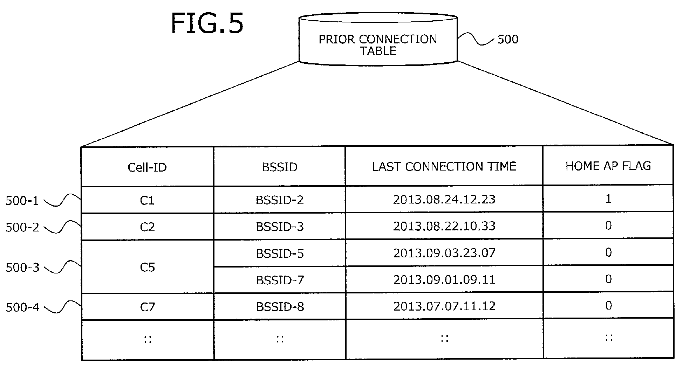

FIG. 5 is a diagram depicting an example of the contents of the prior connection table 500. In FIG. 5, the prior connection table 500 has fields for cell-IDs, BSSIDs, last connection times, and a home AP flag. By setting information into each of the fields, prior connection information (e.g., prior connection information 500-1 to 500-4) is stored as records. The access point information described in FIG. 1 corresponds to the prior connection information in the prior connection table 500.

Here, a cell-ID is identification information uniquely identifying the cell Cj of a base station BSj in a mobile communications network. A basic SSID (BSSID) is identification information uniquely identifying an access point APi of a wireless LAN. A last connection time is the date and time when the mobile terminal apparatus 101 last connected to the access point APi.

The home AP flag is information indicating that an access point APi is a home AP. A home AP is an access point APi that is installed at a specified location and for which a connection process for connection to the network 210 has been performed by the mobile terminal apparatus 101. The specified access point described in FIG. 1 corresponds to a home AP.

A specified location may be a place corresponding to a residence and as described above is a place where the user of the mobile terminal apparatus 101 has a high possibility of staying for a relatively long time. The home AP flag is set to "1" when an access point APi is a home AP and is set to "0" when an access point APi is not a home AP.

For example, the prior connection information 500-1 associates and indicates a cell-ID "C1", a BSSID "BSSID-2", a last connection time "2013.08.24.12:23", and the home AP flag "1". From the prior connection information 500-1, it can be identified that in the cell C1 of the base station BS1, the mobile terminal apparatus 101 last accessed the access point AP2 (BSSID-2) on 2013.08.24 at 12:23. Further, from the prior connection information 500-1, it can be identified that the access point AP2 (BSSID-2) is a home AP.

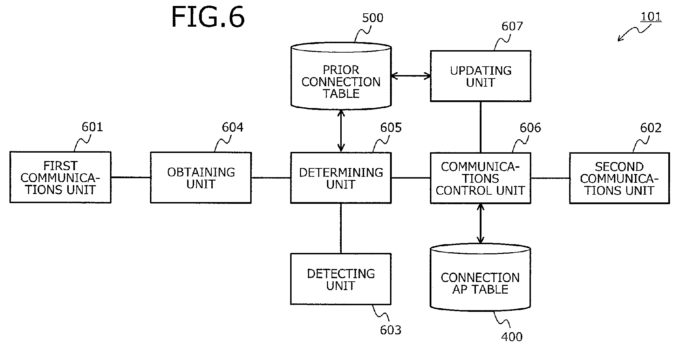

The contents of the prior connection table 500, for example, are updated at the time of connection from the mobile terminal apparatus 101 to an access point APi. A process of updating the contents of the prior connection table 500 will be described in detail with reference to FIG. 6.

### (Example of functional configuration of mobile terminal apparatus 101)

FIG. 6 is a block diagram of an example of a functional configuration of the mobile terminal apparatus 101 according to the first embodiment. In FIG. 6, the mobile terminal apparatus 101 includes a first communications unit 601, a second communications unit 602, a detecting unit 603, an obtaining unit 604, a determining unit 605, a communications control unit 606, and an updating unit 607. Functions of the detecting unit 603 to the updating unit 607 form a control unit and more specifically, for example, are realized by executing on the CPU 301, a program stored in the memory 302 depicted in FIG. 3. Further, a function of the first communications unit 601 is realized by the public network I/F 305 and a function of the second communications unit 602 is realized by the WLAN I/F 306. Processing results of the functions, for example, are stored to the memory 302.

The first communications unit 601 has a function of wirelessly communicating with a base station BSj with which wireless communication is possible among the base stations BS1 to BSm. More specifically, for example, the first communications unit 601 periodically (e.g., 2.56 [second] interval) receives base station information from a base station BSj with which wireless communication is possible. The base station information includes a cell-ID identifying the cell Cj of the base station BSj. Further, the first communications unit 601 connects to the network 210 through the base station BSj.

The second communications unit 602 has a function of wirelessly communicating with an access point APi with which wireless communication is possible among the access points AP1 to APn. More specifically, for example, the second communications unit 602 connects to the network 210 through an available access point APi.

The detecting unit 603 has a function of detecting transition of the display 303 (refer to FIG. 3) from the non-display state to the display state. More specifically, for example, when the display 303 transitions from the non-display state to the display state consequent to user operation of the power key of the keypad 304 (refer to FIG. 3), the detecting unit 603 detects the transition of the display 903 from the non-display state to the display state.

More specifically, for example, when consequent to a resume function, user operation resumes from a state immediately before the display 303 transitioned to non-display, the detecting unit 603 may detect the transition of the display 303 from the non-display state to the display state. Further, for example, when an application such as an alarm activated at a preset time is activated, the detecting unit 603 may detect the transition of the display 303 from the non-display state to the display state.

The detecting unit 603 further has a function of detecting transition of the display 303 from the display state to the non-display state. More specifically, for example, when the display 303 transitions from the display state to the non-display state consequent to user operation of the power key of the keypad 304, the detecting unit 603 detects the transition of the display 303 from the display state to the non-display state.

Further, for example, when a screen_OFF timer reaches a specified value, the detecting unit 603 may detect the transition of the display 303 from the display state to the non-display state. Further, for example, when transition to a power saving mode that suppresses power supply to the display 303 occurs, the detecting unit 603 may detect the transition of the display 303 from the display state to the non-display state.

The screen_OFF timer is a timer that measures the time that elapses from the transition of the display 303 from the non-display to the display state or from the receipt of a user operation, until the next user operation is received. The specified value of the screen_OFF timer, for example, is a period on the order of about 30 seconds to 10 minutes.

The obtaining unit 604 has a function of obtaining the cell-ID of the cell Cj (of a base station BSj) in which the mobile terminal apparatus 101 is present. More specifically, for example, the obtaining unit 604 obtains as the cell-ID of the cell Cj in which the mobile terminal apparatus 101 is present, the cell-ID included in the base station information received by the first communications unit 601.

Further, among the base stations BS1 to BSm, there may be multiple base stations with which the mobile terminal apparatus 101 can wirelessly communicate. In this case, the obtaining unit 604, for example, obtains as the cell-ID of the cell Cj in which the mobile terminal apparatus 101 is present, the cell-ID included in the base station information of the base station for which the radio wave strength is greatest among the base stations with which wireless communication is possible.

The determining unit 605 has a function of determining whether a home AP exists in the cell Cj (of a base station BSj) in which the mobile terminal apparatus 101 is present. More specifically, for example, with each detection of a transition from the non-display state to the display state by the detecting unit 603, the determining unit 605 searches the prior connection table 500 (refer to FIG. 5) for prior connection information that corresponds to the cell-ID of the cell Cj in which the mobile terminal apparatus 101 is present. The cell-ID of the cell Cj in which the mobile terminal apparatus 101 is present is obtained by the obtaining unit 604.

Here, when prior connection information is retrieved, the determining unit 605 determines whether "1" is set in the home AP flag field of the retrieved prior connection information. If "1" is set in the home AP flag field, the determining unit 605 determines that a home AP exists in the cell Cj in which the mobile terminal apparatus 101 is present.

On the other hand, if "0" is set in the home AP flag field, the determining unit 605 determines that no home AP exists in the cell Cj in which the mobile terminal apparatus 101 is present. In this case, the determining unit 605 may determine that in the cell Cj in which the mobile terminal apparatus 101 is present, a connection AP that is not installed at a specified location exists. Here, a connection AP is an access point APi for which a connection process for connecting to the network 210 has been performed by the mobile terminal apparatus 101.

Further, if no prior connection information is retrieved from the prior connection table 500, the determining unit 605 determines that no home AP exists in the cell Cj in which the mobile terminal apparatus 101 is present. In this case, the determining unit 605 may determine that no connection AP exists in the cell Cj in which the mobile terminal apparatus 101 is present.

Further, the determining unit 605 may determine whether a home AP exists in the base station BS cell Cj in which the mobile terminal apparatus 101 is present, each time the base station BSj to which the mobile terminal apparatus 101 is connected changes. Here, to continue communication with a base station BSj, the mobile terminal apparatus 101 performs so-called handover, a process of switching the base station BSj to which the mobile terminal apparatus 101 connects among the stations BS1 to BSm.

For example, the base station BSj to which the mobile terminal apparatus 101 connects may change consequent to the movement of the user of the mobile terminal apparatus 101. Further, even when the user is in a substantially stationary state, the base station BS to which the mobile terminal apparatus 101 connects may change consequent to a change in the radio wave strength from the base station BSj to which the mobile terminal apparatus 101 is connected.

In other words, the determining unit 605, consequent to detecting handover of the mobile terminal apparatus 101, determines that the base station BSj to which the mobile terminal apparatus 101 is connected has changed. More specifically, for example, the determining unit 605 may detect handover, when the cell-ID obtained by the obtaining unit 604 for the cell Cj in which the mobile terminal apparatus 101 is present, differs from the cell-ID previously obtained.

The communications control unit 606 has a function of controlling the second communications unit 602, based on a determination result obtained by the determining unit 605. More specifically, for example, when a home AP is determined to exist, the communications control unit 606 controls the second communications unit 602 to periodically search for an access point APi, in response to the detecting unit 603 detecting transition from the display state to the non-display.

As a result, when a home AP exists in a cell Cj of a base station BSj, a search for an access point APi in the cell Cj can be periodically performed triggered by screen_OFF. A cycle p1 of a search for an access point APi, triggered by screen_OFF can be arbitrarily set. The cycle p1, for example, is set to a value on the order of several hundred seconds.

Further, when a connection AP that is not installed at a specified location is determined to exist, the communications control unit 606, for example, controls the second communications unit 602 to periodically search for an access point APi for a fixed number of times C or a fixed interval T, in response to transition from the display state to the non-display state. The fixed number of times C and the fixed interval T can be arbitrarily set. The fixed number of times C, for example, is set to a value on the order of several times. The fixed interval T, for example, is set to a value on the order of several tens of seconds to several hundreds of seconds.

As a result, when a connection AP that is not installed at a specified location exists in a cell Cj a base station BSj, the search count or search interval for an access point APi in the cell Cj during screen_OFF can be limited.

Further, when a connection AP that is not installed at a specified location is determined to exist, the communications control unit 606, for example, first controls the second communications unit 602 to start periodically searching for an access point APi, in response to transition from the display state to the non-display state. Subsequently, the communications control unit 606 may suspend the power supply to the second communications unit 602 after the fixed interval T elapses from the transition from the display state to the non-display state.

Further, in response to a transition of the display 303 from the non-display state to the display state, the communications control unit 606 may control the second communications unit 602 to periodically search for an access point APi. A cycle p2 of a search for an access point APi, triggered by screen_ON can be arbitrarily set. The cycle p2, for example, is a cycle shorter than the cycle p1.

Further, when no connection AP is determined to exist, the communications control unit 606 may suspend the search for an access point APi, in response to transition from the display state to the non-display state. In other words, configuration may be such that when no connection AP exists in the cell Cj in which the mobile terminal apparatus 101 is present, the communications control unit 606 does not search for an access point APi.

Scanning operations of searching for an access point APi, for example, include an active scan and a passive scan. The communications control unit 606 may perform both an active scan and a passive scan, or any one thereof, as a scanning operation of searching for an access point APi.

An active scan is a scanning operation of searching for an access point APi by transmitting a probe request signal to channels used in a wireless LAN and receiving a probe response signal. Wireless LAN channels used in an active scan, for example, are the 13 channels of a frequency band of 2.4 [GHz] prescribed in 802.11 of the standards of The Institute of Electrical and Electronics Engineers, Inc. (IEEE).

A passive scan is a scanning operation of searching for an access point APi by receiving a signal (packet) called a beacon from an access point APi. Wireless LAN channels used for a passive scan, for example, are the four W52 (type) channels, the four W53 (type) channels, and the eleven W56 (type channels) prescribed in IEEE802.11.

The communications control unit 606 further has a function of controlling the second communications unit 602 to connect to a found access point APi. More specifically, for example, first, the communications control unit 606 refers to the connection AP table 400 (refer to FIG. 4), and determines whether the ESSID of a found access point APi is registered. The ESSID of a found access point APi, for example, as a result of performing a scanning operation, is included in a scan result sent from the second communications unit 602 to the communications control unit 606.

Here, if the ESSID is registered, the communications control unit 606 controls the second communications unit 602 to start a connection process with the found access point APi. On the other hand, if the ESSID is not registered, the communications control unit 606 does not start the connection process with the found access point APi. As a result, when a found access point APi is an access point AP that can be used, the connection process is performed, enabling automatic connection to the access point APi.

Further, the communications control unit 606 may control the second communications unit 602 to start a connection process with a found access point APi, consequent to a user operation. More specifically, for example, when connecting to an access point APi for the first time, the communications control unit 606, consequent to a user input, controls the second communications unit 602 to start a connection process with a found access point APi.

The updating unit 607 has a function of updating prior connection to an access point APi in the cell Cj in which the mobile terminal apparatus 101 is present, when connection to the access point APi is completed. More specifically, for example, first, the updating unit 607 searches the prior connection table 500 for prior connection information that corresponds to the cell-ID of the cell Cj in which the mobile terminal apparatus 101 is present.

Here, if prior connection information is retrieved, the updating unit 607 determines whether the BSSID of the connected access point APi is set in the BSSID field of the retrieved prior connection information. The BSSID of the connected access point APi, for example, as a result of performing a scanning operation, is included in a scan result sent from the second communications unit 602 to the communications control unit 606.

Here, if the BSSID is set, there is prior connection to the access point APi and therefore, the updating unit 607 overwrites the date and time of connection to the access point APi, in the last connection time field of the retrieved prior connection information.

On the other hand, if the BSSID is not set, the access point APi is being connected to for the first time and therefore, the updating unit 607 adds the BSSID of the access point APi to the BSSID field of the retrieved prior connection information. Further, the updating unit 607 adds the date and time of connection to the access point APi, to the last connection time field of the retrieved prior connection information. The updating unit 607 further determines whether the connected access point APi is installed in a specified location.

More specifically, for example, the updating unit 607 may refer to home AP information (not-depicted) and determine whether the connected access point APi is installed at a specified location. Home AP information is information that stores the BSSID of an access point APi installed at a specified location.

Here, if the access point APi is installed at a specified location, the updating unit 607 sets "1" in the home AP flag field of the retrieved prior connection information. On the other hand, if the access point APi is not installed at a specified location, the updating unit 607 sets "0" in the home AP flag field of the retrieved prior connection information.

Further, if no prior connection information is retrieved from the prior connection table 500, there is no prior connection to an access point APi in the cell Cj in which the mobile terminal apparatus 101 is present and therefore, the updating unit 607 newly registers into the prior connection table 500, new prior connection information.

More specifically, for example, the updating unit 607 refers to the home AP information and determines whether the connected access point APi is installed at a specified location. Subsequently, the updating unit 607 sets into the respective fields in the prior connection table 500, the cell-ID of the cell Cj in which the mobile terminal apparatus 101 is present, the BSSID of the connected access point APi, the last connection time, and the home AP flag.

Home AP information, for example, is created by user operation of the keypad 304 and stored in the memory 302. In other words, the user creates the home AP information by inputting to the mobile terminal apparatus 101, the BSSID of the access point APi that has been determined to be installed at a specified location.

Further, when connecting to an access point APi for the first time, the mobile terminal apparatus 101 may display on the display 303, a selection screen that receives input of a selection indicating whether the access point APi is installed at a specified location. In this case, if input is received of selection indicating that the access point APi is installed at a specified location, the mobile terminal apparatus 101 registers the BSSID of the access point APi into the home AP information.

When newly registering prior connection information into the prior connection table 500, the updating unit 607 may calculate a total count M of the prior connection information stored in the prior connection table 500. When the calculated total count M is a threshold Mth or greater, the updating unit 607 may delete the prior connection information having a last connection time that is oldest among the prior connection information stored in the prior connection table 500.

Here, the threshold Mth represents an upper limit of the prior connection information that can be registered in the prior connection table 500. The threshold Mth can be arbitrarily set and, for example, is preset and stored in the memory 302. However, when information for multiple access points AP (BSSID, last connection time, home AP flag) is set in a given prior connection information record, the information of the access point AP for which the last connection time is oldest in the prior connection information record is deleted.

Thus, by providing an upper limit on the total count M of prior connection information that can be registered in the prior connection table 500, increases in the information volume of the prior connection table 500 can be suppressed.

Further, the updating unit 607 may delete among the prior connection information stored in the prior connection table 500, prior connection information for which the last connection time has not been updated for a predetermined period Tm or longer. The predetermined period Tm can be arbitrarily set and, for example, is preset and stored in the memory 302. For example, the predetermined period Tm is set to a value on the order of several months to several years.

However, information for multiple access points AP (BSSID, last connection time, home AP flag) may be set in a given prior connection information record. In this case, the updating unit 607 deletes from the prior connection information, the information of the access point AP for which the last connection time has not been updated for the predetermined period Tm or longer. As a result, increases in the information volume of the prior connection table 500 can be suppressed.

### (Example of communication control of access point APi )

An example of detailed communication control by the communications control unit 606 to control wireless communication with an access point APi by the second communications unit 602 will be described.

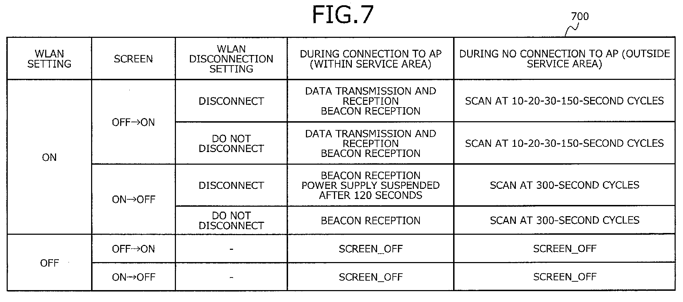

FIG. 7 is a diagram depicting an example of controlling communication with an access point APi. In FIG. 7, a communication control table 700 indicates how wireless communication with an access point APi is controlled, according to combinations of WLAN settings, states of the display 303, WLAN disconnection settings, and connection states with access points APi.

Here, a WLAN setting selects whether wireless communication with an access point APi is to be performed. When the WLAN setting is "ON", power is supplied to the WLAN I/F 306, enabling wireless communication to be performed with the access point APi. When the WLAN setting is "OFF", power supply to the WLAN I/F 306 is suspended and wireless communication with the access point APi is not performed. The WLAN setting, for example, can be arbitrarily set and changed by user operation of the keypad 304.

A WLAN disconnection setting selects whether wireless communication with an access point APi is to be severed during the non-display state (screen_OFF) of the display 303. When the WLAN disconnection setting is "disconnect", wireless communication with the access point APi is severed if after transition of the display 303 from the display state to the non-display state, there is no user input operation during an entire predetermined period F. In the example depicted in FIG. 7, the predetermined period F is F=120 [seconds]". When the WLAN disconnection setting is "do not disconnect", the wireless communication with an access point APi is not severed even if the display 303 transitions from the display state to the non-display.

More specifically, in a case of a WLAN setting "ON" and a WLAN disconnection setting "disconnect", the communications control unit 606 controls the wireless communication with an access point APi by the second communications unit 602 as follows.

During connection with an access point APi and screen_ON, data transmission and reception with the access point APi is performed and a beacon is received from the access point APi. During screen_ON with no connection to an access point APi, scanning operations of searching for an access point APi are repeatedly performed at cycles (cycle p2 described above) of 10 seconds, 20 seconds, 30 seconds, and 150 seconds.

Further, during connection to an access point APi and screen_OFF, a beacon is received from the access point APi and power supply to the WLAN I/F 306 is suspended 120 seconds after transition of the display 303 from the display state to the non-display state. Further, during screen_OFF with no connection to an access point APi, scanning operations for searching for an access point APi are performed at a 300-second cycle (cycle p1 described above) and power supply to the WLAN I/F 306 is suspended 120 seconds after transition of the display 303 from the display state to the non-display state. In other words, scanning operation when there is no connection to an access point APi is substantially one time.

Further, in a case of a WLAN setting "ON" and a WLAN disconnection setting "do not disconnect", the communications control unit 606 controls the wireless communication with an access point APi by the second communications unit 602 as follows.

During connection to an access point APi and screen_ON, data transmission and reception with the access point APi is performed and a beacon is received from the access point APi. Further, during screen_ON with no connection to an access point APi, scanning operations of searching for an access point APi are repeatedly performed at cycles (cycle p2 described above) of 10 seconds, 20 seconds, 30 seconds, and 150 seconds.

Further, during connection to an access point APi and screen_OFF, a beacon is received from the access point APi. During screen_OFF with no connection to an access point APi, scanning operations of searching for an access point APi are performed at a 300-second cycle.

Further, in a case of a WLAN setting "OFF", the communications control unit 606 suspends the power supply to the WLAN I/F 306. In other words, wireless communication with an access point APi by the second communications unit 602 is not performed. In a case of a WLAN setting "ON" during charging of the battery (not depicted) of the mobile terminal apparatus 101, the communications control unit 606 sets the WLAN disconnection setting to "do not disconnect".

### (Example of operation of mobile terminal apparatus 101)

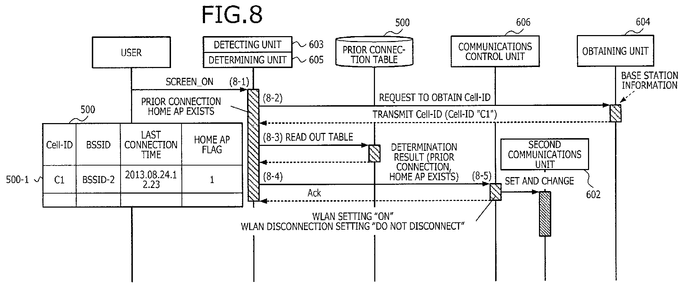

Examples of operation of the mobile terminal apparatus 101 according to the first embodiment will be described with reference to FIGs. 8 to 11.

FIG. 8 is a diagram (part 1) of an example of operation of the mobile terminal apparatus 101 according to the first embodiment. The example of operation of the mobile terminal apparatus 101 depicted in FIG. 8 is an example of operation in a case where a home AP exists in a cell Cj of a base station BSj and the mobile terminal apparatus 101 is present in the cell Cj.
(8-1) The detecting unit 603 detects transition of the display 303 from the non-display state to the display state. In the example depicted in FIG. 8, the detecting unit 603 detects transition of the display from the non-display state to the display state as a result of the display 303 switching from the non-display state to the display state consequent to a user operation.
(8-2) The determining unit 605 requests the obtaining unit 604 to obtain the cell-ID of the cell Cj in which the mobile terminal apparatus 101 is present and thereby, obtains the cell-ID of cell Cj in which the mobile terminal apparatus 101 is present. In the example depicted in FIG. 8, the determining unit 605 obtains the cell-ID "C1" of the cell C1 in which the mobile terminal apparatus 101 is present.
(8-3) The determining unit 605 reads out the prior connection table 500 and determines whether a home AP exists in the cell Cj (of a base station BS) in which the mobile terminal apparatus 101 is present. In the example depicted in FIG. 8, the determining unit 605 searches the prior connection table 500 for the prior connection information 500-1 that corresponds to the cell-ID "C1" of the cell C1 in which the mobile terminal apparatus 101 is present.
   Next, the determining unit 605 determines whether "1" is set in the home AP flag field of the retrieved prior connection information 500-1. Here, since "1" is set in the home AP flag field, the determining unit 605 determines that a home AP exists in the cell C1 in which the mobile terminal apparatus 101 is present.
(8-4) The determining unit 605 transmits the determination result to the communications control unit 606. This determination result indicates that a home AP exists in the cell C1 of the base station BS1.
(8-5) The communications control unit 606, upon receiving the determination result, returns an Ack to the determining unit 605 and when the WLAN setting is "OFF", sets the WLAN setting to "ON". The communications control unit 606 further sets the WLAN disconnection setting to "do not disconnect" when the WLAN disconnection setting is "disconnect".

As a result, when the cell C1 of base station BS1 has a home AP (access point AP2), a search for an access point APi in the cell C1 can be performed periodically triggered by screen_OFF.

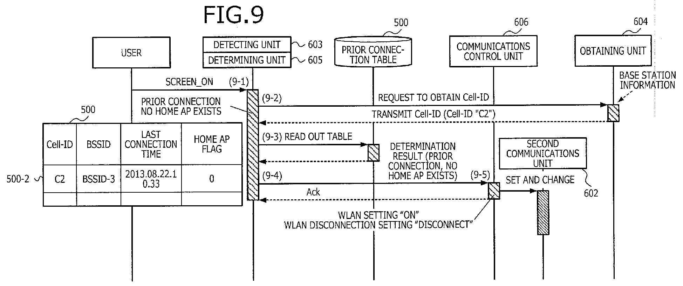

FIG. 9 is a diagram (part 2) of an example of operation of the mobile terminal apparatus 101 according to the first embodiment. The example of operation of the mobile terminal apparatus 101 depicted in FIG. 9 is an example of operation in a case where no home AP exists in the cell Cj (of a base station BSj) in which the mobile terminal apparatus 101 is present.
(9-1) The detecting unit 603 detects transition of the display from the non-display state to the display state. In the example depicted in FIG. 9, the detecting unit 603 detects transition of the display from the non-display state to the display state as a result of the display 303 switching from the non-display state to the display state consequent to a user operation.
(9-2) The determining unit 605 requests the obtaining unit 604 to obtain the cell-ID of the cell Cj in which the mobile terminal apparatus 101 is present and thereby, obtains the cell-ID of cell Cj in which the mobile terminal apparatus 101 is present. In the example depicted in FIG. 9, the determining unit 605 obtains the cell-ID "C2" of the cell C2 in which the mobile terminal apparatus 101 is present.
(9-3) The determining unit 605 reads out the prior connection table 500 and determines whether a home AP exists in the cell Cj (of a base station BS) in which the mobile terminal apparatus 101 is present. In the example depicted in FIG. 9, the determining unit 605 searches the prior connection table 500 for the prior connection information 500-2 that corresponds to the cell-ID "C2" of the cell C2 in which the mobile terminal apparatus 101 is present.
   Next, the determining unit 605 determines whether "1" is set in the home AP flag field of the retrieved prior connection information 500-2. Here, since "0" is set in the home AP flag field, the determining unit 605 determines that no home AP exists in the cell C2 in which the mobile terminal apparatus 101 is present.
(9-4) The determining unit 605 transmits the determination result to the communications control unit 606. This determination result indicates that a connection AP that is not installed at a specified location in the cell C2 of the base station BS2 exists.
(9-5) The communications control unit 606, upon receiving the determination result, returns an Ack to the determining unit 605 and when the WLAN setting is "OFF", sets the WLAN setting to "ON". The communications control unit 606 further sets the WLAN disconnection setting to "disconnect" when the WLAN disconnection setting is "do not disconnect"

As a result, when a connection AP (access point AP3) that is not installed at a specified location exists in the cell C2 of the base station BS2, the search count and search interval for an access point APi during screen_OFF can be limited.

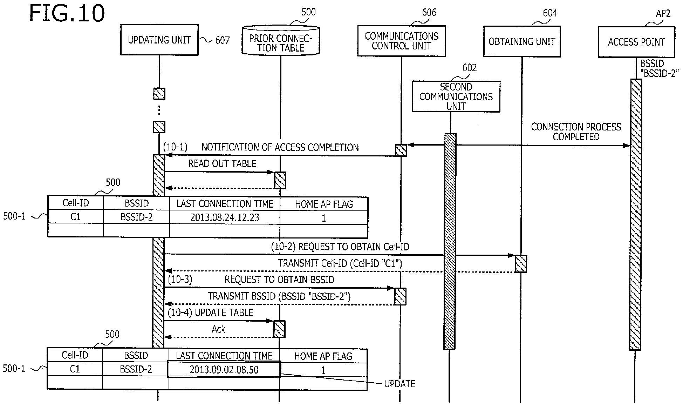

FIG. 10 is a diagram (part 3) of an example of operation of the mobile terminal apparatus 101 according to the first embodiment. The example of operation of the mobile terminal apparatus 101 depicted in FIG. 10 is an example of operation in case where connection to an access point APi is completed.
(10-1) The updating unit 607 reads out the prior connection table 500, upon receiving from the communications control unit 606, notification that access to an access point APi has been completed.
(10-2) The updating unit 607 requests the obtaining unit 604 to obtain the cell-ID of the cell Cj in which the mobile terminal apparatus 101 is present and thereby, obtains the cell-ID of cell Cj in which the mobile terminal apparatus 101 is present. In the example depicted in FIG. 10, the updating unit 607 obtains the cell-ID "C1" of the cell Cj in which the mobile terminal apparatus 101 is present.
(10-3) The updating unit 607 requests the communications control unit 606 to obtain the BSSID of the access point APi to which connection has been completed and thereby, obtains the BSSID of the currently connected access point APi. In the example depicted in FIG. 10, the updating unit 607 obtains the BSSID "BSSID-2" of the currently connected access point AP2.
(10-4) The updating unit 607 updates the contents of the prior connection table 500. More specifically, for example, first, the updating unit 607 searches the prior connection table 500 for prior connection information that corresponds to the cell-ID of the cell Cj in which the mobile terminal apparatus 101 is present. Next, the updating unit 607 determines whether the BSSID of the currently connected access point APi is set in the retrieved prior connection information.

In the example depicted in FIG. 10, the prior connection information 500-1 that corresponds to the cell-ID "C1" of the cell C1 in which the mobile terminal apparatus 101 is present is retrieved. Further, the BSSID "BSSID-2" of the currently connected access point AP2 is set in the prior connection information 500-1. In this case, the updating unit 607 overwrites the date and time of connection to the access point AP2, into the last connection time field of the prior connection information 500-1.

The time of connection to an access point APi, for example, may be a reception time when the updating unit 607 receives notification of the completion of connection to the access point APi, or may be included in the notification of the completion of connection to the access point APi. The reception time, for example, is measured by a time measuring function of the mobile terminal apparatus 101.

As a result, when connection to an access point APi has been completed, the prior connection information corresponding to the cell-ID of the cell Cj in which the mobile terminal apparatus 101 is present is updated in the prior connection table 500.

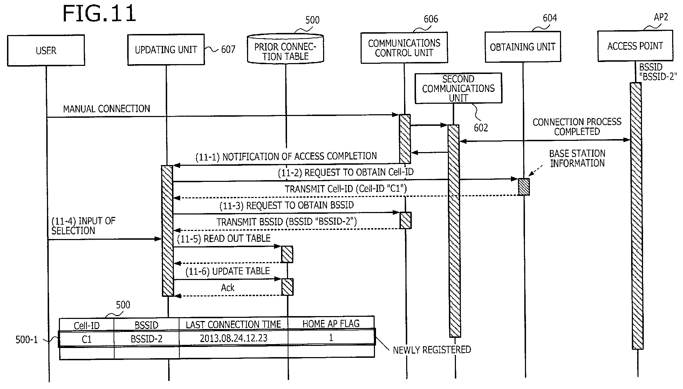

FIG. 11 is a diagram (part 4) of an example of operation of the mobile terminal apparatus 101 according to the first embodiment. The example of operation of the mobile terminal apparatus 101 depicted in FIG. 11 is an example of operation in a case where an access point APi is connected to for the first time.
(11-1) The updating unit 607, as a result of a connection process to an access point APi being started consequent to a user operation, receives from the communications control unit 606, notification that connection to the access point APi has been completed.
(11-2) The updating unit 607 requests the obtaining unit 604 to obtain the cell-ID of the cell Cj in which the mobile terminal apparatus 101 is present and thereby, obtains the cell-ID of cell Cj in which the mobile terminal apparatus 101 is present. In the example depicted in FIG. 11, the updating unit 607 obtains the cell-ID "C1" of the cell Cj in which the mobile terminal apparatus 101 is present.
(11-3) The updating unit 607 requests the communications control unit 606 to obtain the BSSID of the access point APi to which connection has been completed and thereby, obtains the BSSID of the currently connected access point APi. In the example depicted in FIG. 11, the updating unit 607 obtains the BSSID "BSSID-2" of the currently connected access point AP2.
(11-4) The updating unit 607 receives input of selection by a user operation, indicating whether the access point APi is installed at a specified location. In the example depicted in FIG. 11, the updating unit 607 receives input of selection indicating that the access point AP2 is installed at a specified location.
(11-5) The updating unit 607 reads out the prior connection table 500, upon obtaining the BSSID of the currently connected access point APi.
(11-6) the updating unit 607 updates the contents of the prior connection table 500, upon receiving input of selection of whether the access point APi is installed at a specified location. More specifically, for example, the updating unit 607 sets into the respective fields of the prior connection table 500, the cell-ID of the cell Cj in which the mobile terminal apparatus 101 is present, the BSSID of the currently connected access point APi, the last connection time, and the home AP flag.

In the example depicted in FIG. 11, the updating unit 607 sets into the respective fields of the prior connection table 500, the cell-ID "C1", the BSSID" "BSSID-2", the last connection time "2013.08.24.12:23", and the home AP flag "1". As a result, the prior connection information 500-1 is newly registered into the prior connection table 500 as a record.

### (Procedure of various processes of mobile terminal apparatus 101)

Procedures of various processes of the mobile terminal apparatus 101 according to the first embodiment will be described. A procedure of a communications control process of the mobile terminal apparatus 101 according to the first embodiment will be described first.

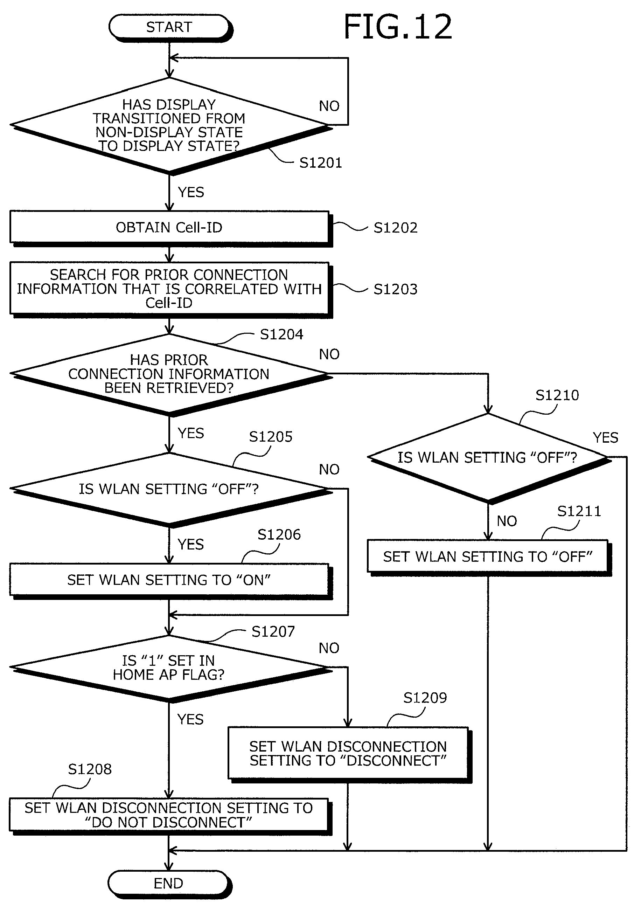

FIG. 12 is a flowchart of an example of a procedure of the communications control process of the mobile terminal apparatus 101 according to the first embodiment. In the flowchart depicted in FIG. 12, the mobile terminal apparatus 101 determines whether the display 303 has transitioned from the non-display state to the display state (step S1201).

Here, the mobile terminal apparatus 101 stands by until the display 303 transitions from the non-display state to the display state (step S1201: NO). When the display 303 has transitioned from the non-display state to the display state (step S1201: YES), the mobile terminal apparatus 101 obtains the cell-ID of the cell Cj (of a base station BSj) in which the mobile terminal apparatus 101 is present (step S1202).

Next, the mobile terminal apparatus 101 searches the prior connection table 500 for prior connection information that is correlated with the obtained cell-ID of the cell Cj in which the mobile terminal apparatus 101 is present (step S1203). The mobile terminal apparatus 101 determines whether prior connection information has been retrieved from the prior connection table 500 (step S1204).

Here, if prior connection information has been retrieved (step S1204: YES), the mobile terminal apparatus 101 determines whether the WLAN setting is "OFF" (step S1205). If the WLAN setting is "ON" (step S1205: NO), the mobile terminal apparatus 101 transitions to step S1207.

On the other hand, if the WLAN setting is "OFF" (step S1205: YES), the mobile terminal apparatus 101 sets the WLAN setting to "ON" (step S1206). The mobile terminal apparatus 101 determines whether "1" is set in the home AP flag field of the retrieved prior connection information (step S1207).

Here, if "1" is set in the home AP flag field (step S1207: YES), the mobile terminal apparatus 101 sets the WLAN disconnection setting to "do not disconnect" (step S1208), and ends a series of operations according to the flowchart.

On the other hand, if "0" is set in the home AP flag field (step S1207: NO), the mobile terminal apparatus 101 sets the WLAN disconnection setting to "disconnect" (step S1209), and ends a series of operations according to the flowchart.

At step S1204, if no prior connection information is retrieved (step S1204: NO), the mobile terminal apparatus 101 determines whether the WLAN setting is "OFF" (step S1210). If the WLAN setting is "OFF" (step S1210: YES), the mobile terminal apparatus 101 ends a series of operations according to flowchart.

On the other hand, if the WLAN setting is "ON" (step S1210: NO), the mobile terminal apparatus 101 sets the WLAN setting to "OFF" (step S1211), and ends a series of operations according to the flowchart.

As a result, the mobile terminal apparatus 101 can control communication with an access point APi according to the installation location of the access point APi and prior connection to the access point APi in the cell Cj (of a base station BSj) in which the mobile terminal apparatus 101 is present.

A procedure of an updating process performed by the mobile terminal apparatus 101 to update the contents of the prior connection table 500 depicted in FIG. 5 will be described.

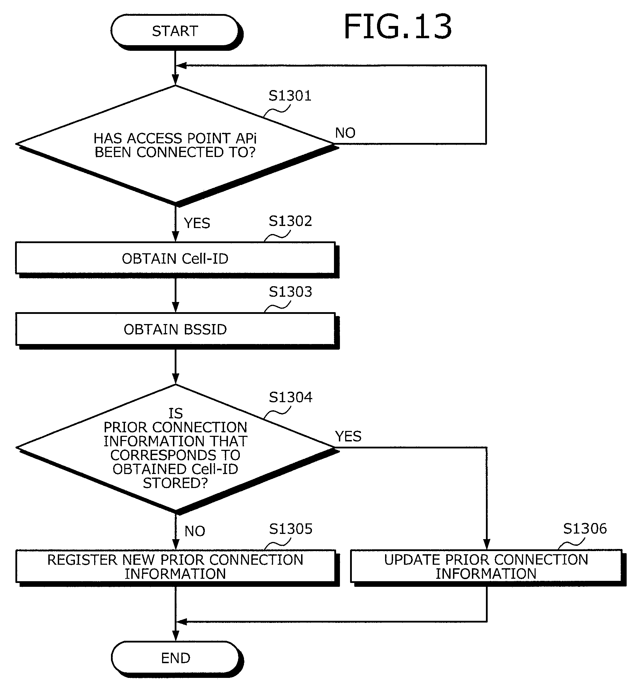

FIG. 13 is a flowchart of an example of a procedure of the updating process of the mobile terminal apparatus 101 according to the first embodiment. In the flowchart depicted in FIG. 13, the mobile terminal apparatus 101 determines whether an access point APi has been connected to (step S1301).

Here, the mobile terminal apparatus 101 stands by until an access point APi has been connected to (step S1301: NO). When an access point APi has been connected to (step S1301: YES), the mobile terminal apparatus 101 obtains the cell-ID of the cell Cj in which the mobile terminal apparatus 101 is present (step S1302).

Next, the mobile terminal apparatus 101 obtains the BSSID of the connected access point APi (step S1303). The mobile terminal apparatus 101 refers to the prior connection table 500 and determines whether prior connection information that corresponds to the obtained cell-ID is stored (step S1304).

Here, if no corresponding prior connection information is stored (step S1304: NO), the mobile terminal apparatus 101 newly registers new prior connection information into the prior connection table 500 (step S1305), and ends a series of operations according to the flowchart.

On the other hand, if corresponding prior connection information is stored (step S1304: YES), the mobile terminal apparatus 101 updates in the prior connection table 500, the prior connection information that corresponds to the obtained cell-ID (step S1306), and ends a series of operations according to the flowchart.

As a result, the contents of the prior connection table 500 can be updated according to the state of connection to an access point APi in the cell Cj in which the mobile terminal apparatus 101 is present.

As described, in response to transition of the display 303 from the non-display state to the display state, the mobile terminal apparatus 101 according to the first embodiment can determine whether a home AP exists in the cell Cj in which the mobile terminal apparatus 101 is present. Further, when a home AP exists, the mobile terminal apparatus 101 can periodically search for an access point APi in response to transition of the display 303 from the display state to the non-display state.

As a result, when a home AP exists in a cell Cj of a base station BSj, the search for an access point APi can be performed periodically in the cell Cj, triggered by screen_OFF. Consequently, even during screen_OFF, an access point APi installed at a specified location can be connected to automatically and drops in usability can be prevented.

The mobile terminal apparatus 101, in response to transition of the display 303 from the non-display state to the display state, can determine whether in the cell Cj in which the mobile terminal apparatus 101 is present, a connection AP that is not installed at a specified location exists. When a connection AP that is not installed at a specified location exists, the mobile terminal apparatus 101 can periodically search for an access point APi the fixed number of times C or for the fixed interval T, in response to transition of the display 303 from the display state to the non-display state.

As a result, when a connection AP that is not installed at a specified location exists in the cell Cj of a base station BSj, the search count and search interval for an access point APi during screen_OFF can be limited. Further, periodic searches for an access point APi, triggered by screen_OFF and performed the fixed number of times C or for the fixed interval T enable usability during screen_OFF to be ensured to a certain extent.

The mobile terminal apparatus 101 can refrain from searching for an access point APi in response to transition of the display 303 from the display state to the non-display state, when no connection AP exists in the cell Cj in which the mobile terminal apparatus 101 is present.

As a result, searches for an access point APi triggered by screen_OFF can be suspended in a cell Cj in which no access point APi available to the user exists, enabling power consumption of the mobile terminal apparatus 101 to be suppressed.

Thus, the mobile terminal apparatus 101 according to the first embodiment can ensure usability and suppress power consumption of the mobile terminal apparatus 101. Further, in a vicinity of a home AP, the mobile terminal apparatus 101 can perform wireless communication through a wireless LAN, even during screen_OFF. As a result, for example, automatic connection to other information communications devices capable of wireless communication and installed at the home of user becomes possible, enabling user convenience to be improved. Other information communications devices include, for example, a personal computer, television, digital signage device, and the like linked to the mobile terminal apparatus 101 and having a function of displaying information of the mobile terminal apparatus 101 (e.g., incoming calls, received email) on the display other another information communications device.

### (Second embodiment)

The mobile terminal apparatus 101 according to a second embodiment will be described. Portions described in the first embodiment are given the same reference numerals used in the first embodiment and redundant description thereof is omitted in the description and drawings.

In the first embodiment, a case is described where the home AP flag of an access point APi is set based on home AP information created according to a user input operation. In the second embodiment, a case will be described where the home AP flag of an access point APi is set based on a connection time to the access point APi.

### (Example of function configuration of mobile terminal apparatus 101)

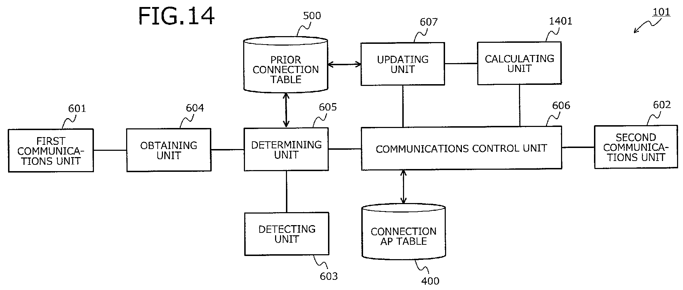

An example of a functional configuration of the mobile terminal apparatus 101 according to the second embodiment will be described. FIG. 14 is a block diagram of an example of a functional configuration of the mobile terminal apparatus 101 according to the second embodiment. In FIG. 14, the mobile terminal apparatus 101 includes the first communications unit 601, the second communications unit 602, the detecting unit 603, the obtaining unit 604, the determining unit 605, the communications control unit 606, the updating unit 607, and a calculating unit 1401. The detecting unit 603 to the updating unit 607, and the calculating unit 1401 are functions forming a control unit and more specifically, for example, functions thereof are realized by executing on the CPU 301, a program stored in the memory 302 depicted in FIG. 3. Further, a function of the first communications unit 601 is realized by the public network I/F 305 and a function of the second communications unit 602 is realized by the WLAN I/F 306. Processing results of the functions, for example, are stored to the memory 302. Hereinafter, functions that differ from those of the mobile terminal apparatus 101 according to the first embodiment will be described.

The calculating unit 1401 has a function of calculating an integrated value of a connection time to an access point APi that performed a connection process to the network 210. Here, the connection time to an access point APi is the time that elapses from connection to the access point APi, until release of the connection to the access point APi.

Further, the calculating unit 1401 may initialize an integrated value Ts of an access point APi in response to connection to the network 210 through an access point APk that differs from the access point APi (k≠i, k=1, 2, ..., n). As a result, even when connection with an access point APi is temporarily released, the connection time to the access point APi can be integrated before connection to an access point APk that differs from the access point APi.

The updating unit 607 has a function of updating based on the integrated value Ts of the connection time to an access point APi calculated by the calculating unit 1401, information that indicates whether an access point APi is installed at a specified location. More specifically, for example, the updating unit 607 determines if the calculated integrated value Ts of the connection time to the access point APi is a threshold Tth or greater.

Here, the threshold Tth can be set arbitrarily by a user input operation and is set to a value that when the integrated value Ts is the threshold Tth or greater, it can be determined that the access point APi is installed at a specified location. The threshold Tth, for example, is set to a value on the order of several tens of minutes to several hours.

The updating unit 607, in response to the integrated value Ts being determined to be the threshold Tth or greater, updates in the prior connection table 500, the prior connection information that corresponds to the cell Cj in which the access point APi exists. More specifically, for example, the updating unit 607 identifies the prior connection information in which the BSSID of the access point APi is set in the BSSID field of the prior connection table 500. The updating unit 607 updates the home AP flag of the identified prior connection information to "1".

### (Calculation examples of integrated value Ts of connection time to access point APi)

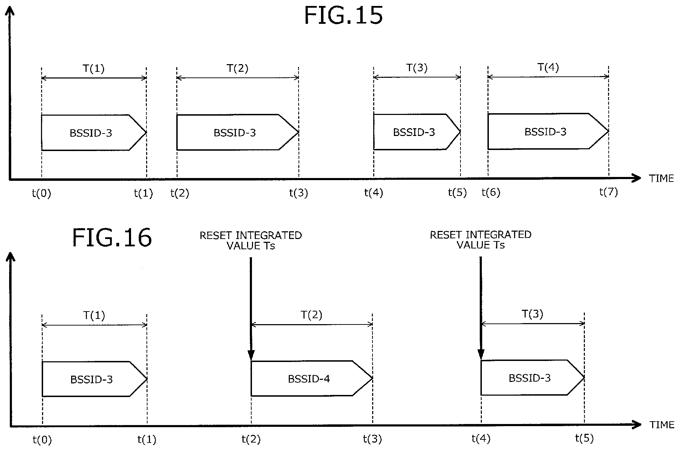

Calculation examples of the integrated value Ts of the connection time to an access point APi will be described with reference to FIGs. 15 and 16. Here, a case where the threshold Tth is "Tth=60 [minutes]" will be described.

FIG. 15 is a diagram (part 1) depicting a calculation example of the integrated value Ts of the connection time to an access point APi. FIG. 15 depicts the time (e.g., date and time) of connection to an access point AP3 of the BSSID "BSSID-3" and the time (e.g., date and time) of release of the connection to the access point AP3.

More specifically, at time t(0), the access point AP3 is connected to and at time t(1), the connection to the access point AP3 is released. In this case, the calculating unit 1401 adds a connection time T(1) to the integrated value Ts of the connection time to the access point AP3, where the initial value of the integrated value Ts is "Ts=0". The connection time T(1) is "T(1)=t(1)-t(0)" and here, is assumed to be "T(1)=18 [minutes]".

The updating unit 607 determines if the integrated value Ts of the connection time to the access point AP3 calculated by the calculating unit 1401 is the threshold Tth or greater. Here, at the time point of time t(1), the integrated value Ts is 18 minutes and therefore, the updating unit 607 determines that the integrated value Ts is less than the threshold Tth.

At time t(2), the access point AP3 is connected to and at time t(3), the connection to the access point AP3 is released. In this case, the calculating unit 1401 adds the connection time T(2) to the integrated value Ts of the connection time to the access point AP3. Here, the connection time T(2) is "T(2)=t(3)-t(2)" and "T(2)=23 [minutes]" is assumed.

The updating unit 607 determines if the integrated value Ts of the connection time to the access point AP3 calculated by the calculating unit 1401 is the threshold Tth or greater. Here, at the time point of time t(3), the integrated value Ts is 41 minutes and therefore, the updating unit 607 determines that the integrated value Ts is less than the threshold Tth.

At time t(4), the access point AP3 is connected to and at time t(5), the connection to the access point AP3 is released. In this case, the calculating unit 1401 adds the connection time T(3) to the integrated value Ts of the connection time to the access point AP3. Here, the connection time T(3) is "T(3)=t(5)-t(4)" and "T(3)=15 [minutes]" is assumed.

The updating unit 607 determines if the integrated value Ts of the connection time to the access point AP3 calculated by the calculating unit 1401 is the threshold Tth or greater. Here, at the time point of time t(5), the integrated value Ts is 56 minutes and therefore, the updating unit 607 determines that the integrated value Ts is less than the threshold Tth.

At time t(6), the access point AP3 is connected to and at time t(7), the connection to the access point AP3 is released. In this case, the calculating unit 1401 adds the connection time T(4) to the integrated value Ts of the connection time to the access point AP3. Here, the connection time T(4) is "T(4)=t(7)-t(6)" and "T(4)=23 [minutes]" is assumed.

The updating unit 607 determines if the integrated value Ts of the connection time to the access point AP3 calculated by the calculating unit 1401 is the threshold Tth or greater. Here, at the time point of time t(7), the integrated value Ts is 79 minutes and therefore, the updating unit 607 determines that the integrated value Ts is the threshold Tth or greater.

In this case, the updating unit 607, for example, refers to the prior connection table 500 and identifies the prior connection information 500-2 in which the BSSID "BSSID-3" of the access point AP3 is set in the BSSID field. The updating unit 607 updates the home AP flag of the identified prior connection information 500-2 to "1".

As a result, the available access point AP3 installed at a location having a high possibility of the user of the mobile terminal apparatus 101 staying for a long time can be registered as a home AP.

FIG. 16 is a diagram (part 2) depicting a calculation example of the integrated value Ts of the connection time to an access point APi. FIG. 16 depicts the time (e.g., date and time) of connection to the access points AP3, AP4 of the BSSIDs "BSSID-3, BSSID-4" and the time (e.g., date and time) of release of the connection to the access points AP3, AP4.

More specifically, at time t(0), the access point AP3 is connected to and at time t(1), the connection to the access point AP3 is released. In this case, the calculating unit 1401 adds the connection time T(1) to the integrated value Ts of the connection time to the access point AP3. Here, the initial value of the integrated value Ts is "Ts=0". The connection time T(1) is "T(1)=t(1)-t(0)" and "T(1)=18 [minutes]" is assumed.

The updating unit 607 determines if the integrated value Ts of the connection time to the access point AP3 calculated by the calculating unit 1401 is the threshold Tth or greater. Here, at the time point of time t(1), the integrated value Ts is 18 minutes and therefore, the updating unit 607 determines that the integrated value Ts is less than the threshold Tth.

At time t(2), the access point AP4 is connected to and at time t(3), the connection to the access point AP4 is released. In this case, the calculating unit 1401 initializes the integrated value Ts of the connection time to the access point AP3. The calculating unit 1401 adds the connection time T(2) to the integrated value Ts of the connection time to the access points AP4. Here, the connection time T(2) is "T(2)=t(3)-t(2)" and "T(2)=23 [minutes]" is assumed.

The updating unit 607 determines if the integrated value Ts of the connection time to the access point AP3 calculated by the calculating unit 1401 is the threshold Tth or greater. Here, at the time point of time t(3), the integrated value Ts is 23 minutes and therefore, the updating unit 607 determines that the integrated value Ts is less than the threshold Tth.

At time t(4), the access point AP3 is connected to and at time t(5), the connection to the access point AP3 is released. In this case, the calculating unit 1401 initializes the integrated value Ts of the connection time to the access points AP4. The calculating unit 1401 adds the connection time T(3) to the integrated value Ts of the connection time to the access point AP3. Here, the connection time T(3) is "T(3)=t(5)-t(4)" and "T(3)=18 [minutes]" is assumed.

The updating unit 607 determines if the integrated value Ts of the connection time to the access point AP3 calculated by the calculating unit 1401 is the threshold Tth or greater. Here, at the time point of time t(5), the integrated value Ts is 18 minutes and therefore, the updating unit 607 determines that the integrated value Ts is less than the threshold Tth.

As a result, the integrated value Ts can be reset each time connection to an access point APi changes, enabling registration of a large number of access points APi as a home AP to be prevented.

Further, in the example depicted in FIG. 16, although the integrated value Ts of the access point APi is initialized when the network 210 is connected to through an access point APk that is different from the access point APi, configuration is not limited hereto.

For example, the calculating unit 1401 may calculate at each predetermined interval PT, the integrated value Ts of the connection time to each access point APi that performed a connection process to connect to the network 210. In this case, the calculating unit 1401 does not initialize the integrated value Ts of the connection time to an access point APi, even when connection to the access point APi is released and connection to an access point APk that is different from the access point APi is made within the predetermined interval PT.

Further, at each elapse of the predetermined interval PT, the calculating unit 1401 initializes the integrated value Ts of the connection time to each access point APi. The predetermined interval PT can be arbitrarily set and, for example, is set to an interval on the order of several weeks to several months. In this case, the threshold Tth, for example, is set to a value on the order of several hours to several tens of hours.

Within the predetermined interval PT, there may be multiple access points AP for which the integrated value Ts is the threshold Tth or greater. In this case, the updating unit 607 may register, as a home AP, N (e.g., 3) access points AP having the greatest integrated values Ts among the access points AP for which the integrated value Ts is the threshold Tth or greater within the predetermined interval PT.

### (Procedure of updating process of mobile terminal apparatus 101)

A procedure of an updating process of the mobile terminal apparatus 101 according to the second embodiment will be described.

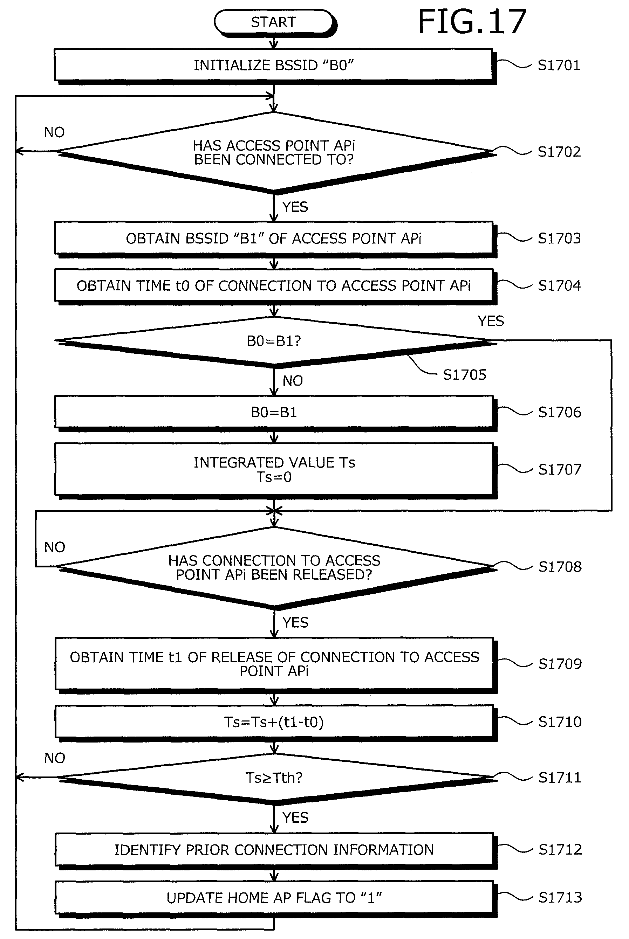

FIG. 17 is a flowchart of an example of a procedure of the updating process of the mobile terminal apparatus 101 according to the second embodiment. In the flowchart depicted in FIG. 17, the mobile terminal apparatus 101 initializes the BSSID "B0" (step S1701). "B0" is the BSSID of the access point APi for which the integrated value Ts is to be calculated.

Next, the mobile terminal apparatus 101 determines whether the access point APi has been connected to (step S1702). Here, the mobile terminal apparatus 101 stands by until the access point APi is connected to (step S1702: NO). When the access point APi has been connected to (step S1702: YES), the mobile terminal apparatus 101 obtains the BSSID "B1" of the access point APi (step S1703).

The mobile terminal apparatus 101 obtains the time t0 of connection to the access point APi (step S1704). The mobile terminal apparatus 101 determines whether the BSSID "B0" and the BSSID "B1" coincide (step S1705). Here, if the BSSID "B0" and the BSSID "B1" coincide (step S1705: YES), the mobile terminal apparatus 101 transitions to step S1708.

On the other hand, if the BSSID "B0" and the BSSID "B1" do not coincide (step S1705: NO), the mobile terminal apparatus 101 sets the BSSID "B0" as "B0=B1" (step S1706), and initializes the integrated value Ts to "Ts=0" (step S1707).

The mobile terminal apparatus 101 determines whether connection to the access point APi has been released (step S1708). Here, the mobile terminal apparatus 101 stands by until the connection to the access point APi is released (step S1708: NO).

When the connection to the access point APi has been released (step S1708: YES), the mobile terminal apparatus 101 obtains the time t1 of the release of the connection to the access point APi (step S1709). The mobile terminal apparatus 101 updates the integrated value Ts to "Ts=Ts+(t1-t0)" (step S1710).

The mobile terminal apparatus 101 determines if the integrated value Ts is the threshold Tth or greater (step S1711). If the integrated value Ts is less than the threshold Tth (step S1711: NO), the mobile terminal apparatus 101 returns to step S1702.

On the other hand, if the integrated value Ts is the threshold Tth or greater (step S1711: YES), the mobile terminal apparatus 101 identifies the prior connection information in which the BSSID "B1" is set in the BSSID of the prior connection table 500 (step S1712). The mobile terminal apparatus 101 updates the home AP flag of the identified prior connection information to "1" (step S1713), and returns to step S1702.

As a result, an access point APi for which the integrated value Ts of the connection time to the mobile terminal apparatus 101 is the threshold Tth or greater can be registered as a home AP.

As described, the mobile terminal apparatus 101 according to the second embodiment calculates the integrated value Ts of the connection time to an access point APi and can determine if the calculated integrated value Ts is the threshold Tth or greater. Further, the mobile terminal apparatus 101 can register an access point APi as a home AP when the integrated value Ts is the threshold Tth or greater.

As a result, an access point APi installed at the residence of the user or a location like the residence of the user can be automatically registered as a home AP, enabling a reduction of the burden placed on the user and improving convenience.

The communications control method described in the present embodiment may be implemented by executing a prepared program on a computer such as a personal computer and a workstation. The communications control program is stored on a computer-readable recording medium such as a hard disk, a flexible disk, a CD-ROM, an MO, and a DVD, read out from the computer-readable medium, and executed by the computer. The communications control program may be distributed through a network such as the Internet.

### EXPLANATIONS OF LETTERS OR NUMERALS

- 101: mobile terminal apparatus
- 400: connection AP table
- 500: prior connection table
- 601: first communications unit
- 602: second communications unit
- 603: detecting unit
- 604: obtaining unit
- 605: determining unit
- 606: communications control unit
- 607: updating unit
- 1401: calculating unit

## Claims

1. A mobile terminal apparatus comprising:
a first communications unit configured to communicate with a base station;
a second communications unit configured to connect to a network through an access point;
a storage unit configured to store therein access point information correlated to identification information of a communications area of the base station and indicating whether the access point is a specified access point; and
a control unit configured to maintain a search for the specified access point, when based on the access point information, the mobile terminal apparatus is present in the communications area of the base station and the communications area has the specified access point.

2. The mobile terminal apparatus according to claim 1, wherein
the control unit, triggered by a screen display ON event, performs the search for the specified access point and even after a screen display OFF event, maintains the search for the specified access point, when the mobile terminal apparatus is present in the communications area of the base station and the communications area has the specified access point.

3. The mobile terminal apparatus according to claim 2, wherein
the control unit, when the mobile terminal apparatus is present in the communications area of the base station and based on the access point information, the communications area has an access point other than the specified access point, performs a search for the access point periodically for a fixed number of times or for a fixed interval.

4. The mobile terminal apparatus according to claim 3, wherein
the control unit calculates an integrated value of a connection time to a first access point that performed a connection process for connecting to the network and when the calculated integrated value is a threshold or greater, stores to the storage unit, access point information indicating that the first access point is the specified access point.

5. The mobile terminal apparatus according to claim 4, wherein
the control unit initializes the integrated value, when a connection process for connecting to the network through a second access point that is different from the first access point is performed.

6. The mobile terminal apparatus according to claim 5, wherein
the control unit, each time the base station to which the mobile terminal apparatus is connected changes, determines whether the communications area of the base station has the specified access point based on the access point information.

7. The mobile terminal apparatus according to claim 6, wherein
the control unit, triggered by the screen display ON event, performs the search for the access point periodically.

8. The mobile terminal apparatus according to claim 7, wherein
the control unit, triggered by the screen display OFF event, suspends the search for the access point, when the mobile terminal apparatus is present in the communications area of the base station and the communications area has no access point that performed the connection process.

9. The mobile terminal apparatus according to claim 8, wherein
the control unit suspends power supply to the second communications unit after an elapse of a fixed interval from the screen display OFF event, when the mobile terminal apparatus is present in the communications area of the base station and the communications area has the access point other than the specified access point.

10. The mobile terminal apparatus according to claim 9, wherein
the control unit:
obtains identification information of the communications area of the base station and in which the mobile terminal apparatus is present,
searches the storage unit for access point information that corresponds to the obtained identification information, and
determines that the mobile terminal apparatus is present in the communications area of the base station and the communications area has the specified access point, when the retrieved access point information that corresponds to the obtained identification information indicates that the access point is the specified access point.

11. The mobile terminal apparatus according to claim 10, wherein
the control unit determines that the mobile terminal apparatus is present in the communications area of the base station and the communications area has the access point other than the specified access point, when the retrieved access point information does not indicate that the access point is the specified access point.

12. The mobile terminal apparatus according to claim 11, wherein
the control unit determines that the mobile terminal apparatus is in the communication area of the base station and the communications area has no access point that performed the connection process, when access point information that corresponds to the obtained identification information is not retrieved from the storage unit.

13. A communications control method of a mobile terminal apparatus having a first communications unit configured to communicate with a base station and a second communications unit configured to connect to a network through an access point, the communications control method comprising:
maintaining, by the mobile terminal apparatus, a search for a specified access point, when based on access point information stored in a storage unit, the mobile terminal apparatus is in a communications area of the base station and the communications area has the specified access point, the storage unit being configured to store the access point information that is associated with identification information of the communications area of the base station and indicates whether the access point is the specified access point.

14. A communications control program that causes a mobile terminal apparatus to execute a process, the mobile terminal apparatus having a first communications unit configured to communicate with a base station and a second communications unit configured to connect to a network through an access point, and the process comprising:
maintaining a search for a specified access point, when based on access point information stored in a storage unit, the mobile terminal apparatus is in a communications area of the base station and the communications area has the specified access point, the storage unit being configured to store the access point information that is associated with identification information of the communications area of the base station and indicates whether the access point is the specified access point.
